# EUROPEAN PATENT SPECIFICATION

(11) **EP 3 044 989 B1**
(45) Date of publication and mention of the grant of the patent: **30.12.2020**
(21) Application number: 14844287.4
(22) Date of filing: 09.09.2014
(51) Int. Cl.: H04W 4/021, G01S 5/00

(54) **MOBILE ASSET CELLULAR DEVICE TRANSMISSION DETECTION METHOD**
VERFAHREN ZUR ERKENNUNG VON ÜBERTRAGUNGEN ZELLULARER MOBILE-ASSET-VORRICHTUNGEN
PROCÉDÉ DE DÉTECTION DE TRANSMISSION DE DISPOSITIF CELLULAIRE D'ÉQUIPEMENT MOBILE

(30) Priority: 10.09.2013 US 201361875737 P
(43) Date of publication of application: 20.07.2016
(73) Proprietor: WI-Tronix, LLC, Bolingbrook, IL 60440 (US)
(72) Inventor: JORDAN, Lawrence, Bolingbrook, IL 60440 (US); HEILMANN, Michael, Bolingbrook, IL 60440 (US); MATTA, Lisa, A., Bolingbrook, IL 60440 (US); SCHMIDT, Michael, Bolingbrook, IL 60440 (US)
(74) Representative: Haseltine Lake Kempner LLP
(86) International application number: PCT/US2014/054768
(87) International publication number: WO 2015/038534

(56) References cited:
- WO-A1-2013/100993
- US-A1- 2002 177 476
- US-A1- 2009 085 728
- US-A1- 2009 275 281
- US-A1- 2009 275 281
- US-A1- 2012 015 690
- US-A1- 2012 028 680
- US-A1- 2013 238 366

## Description

### BACKGROUND OF THE INVENTION

### Field of the Invention

The present invention generally relates to equipment used in mobile assets and particularly, to cellular device detection systems used in value mobile assets.

### Description of the Prior Art

Mobile assets such as locomotives, mining equipment, cargo, marine and military vehicles and vessels typically employ an onboard data acquisition and logging device, similar to a "black box" on airplanes. A typical onboard data acquisition and logging device, or an event/data recorder, comprises digital and analog inputs as well as pressure switches and transducers which record data from various onboard sensor devices. These event/data recorders log a variety of system parameters used for incident investigation, crew performance evaluation, fuel efficiency analysis, maintenance planning, and predictive diagnostics. Recorded data may include such parameters as speed, distance traveled, location, fuel level, engine revolutions per minute (RPM), fluid levels, operator controls, pressures, and temperature conditions. In addition to the basic event and operational data, video, still image and audio event/data recording capabilities are also deployed on many of these same mobile assets. The data recorded onboard a mobile asset, wirelessly transmitted offboard can be triggered, prioritized and filtered based on the detection of cellular device usage. As prior art there may be mentioned US2012/015690, which discloses a method having the precharacterising features of claim 1, US2009/085728, which discloses a system and method for detecting use of a wireless device in a moving vehicle, and US2009/275281, which discloses a mobile phone detection and interruption system and method, and WO2013/100993 which discloses a multi-vehicle surveillance system allowing to retrieve information from adjacent vehicles.

Aspects of the invention are defined by the subject-matter of the independent claims.

### SUMMARY OF THE INVENTION

The mobile asset cellular device detection system and method of an embodiment of the present invention used on locomotives comprises the integration of four components. The components are an event data recorder (ER), similar to a "black box" on airplanes, a locomotive digital video recorder (LDVR), a wireless processing unit (Wi-PU), and a cellular device transmission detector and antenna. The Wi-PU includes two further components, a Wi-Nav and a global positioning system (GPS).

The Wi-PU also includes software that receives ER information, LDVR recordings, Wi-Nav information, GPS information, and geo-fence information. The ER information can include throttle position, brake pressures, wheel speed, emergency brake application, and horn and bell operation. The GPS information can include the mobile asset's location, in latitude and longitude, heading, elevation and speed. The Wi-Nav information can include impact detection and rollover detection. Wi-Nav information can also include accelerometer data for dead reckoning location when GPS data is unavailable.

The cellular device transmission detector, can detect cellular devices that are powered on and transmitting, that includes when a cellular device within the mobile asset is being used to place a phone call, answer a phone call, send a text message, receive a text message, and any other data transmission such as email updates and browsing the internet. The cellular device transmission detector can also detect the operation of a portable cellular based Wi-Fi hotspot device. The user can also set a geo-fence area where cellular device usage is turned off or turned on, if the mobile asset is moving, stopped, or regardless of whether the mobile asset is moving.

### BRIEF DESCRIPTION OF THE DRAWINGS

The present invention is further described with reference to the accompanying drawings in which:
Fig. 1 is a diagram showing the system components of an embodiment of the mobile asset cellular device transmission detector of the present invention;
Fig. 2 is a flow diagram showing when a cellular device transmission is detected in the present invention;
Fig. 3 is a flow diagram showing the wireless processing unit checking the GPS onboard the mobile asset;
Fig. 4 is a flow diagram showing when a trigger episode has been detected within a geo-fence where cellular device transmission detection is enabled; and
Fig. 5 is a flow diagram showing when a trigger episode has been detected and user defined rules indicate that cellular device transmission detection is enabled.

### DETAILED DESCRIPTION OF THE ILLUSTRATED EMBODIMENTS

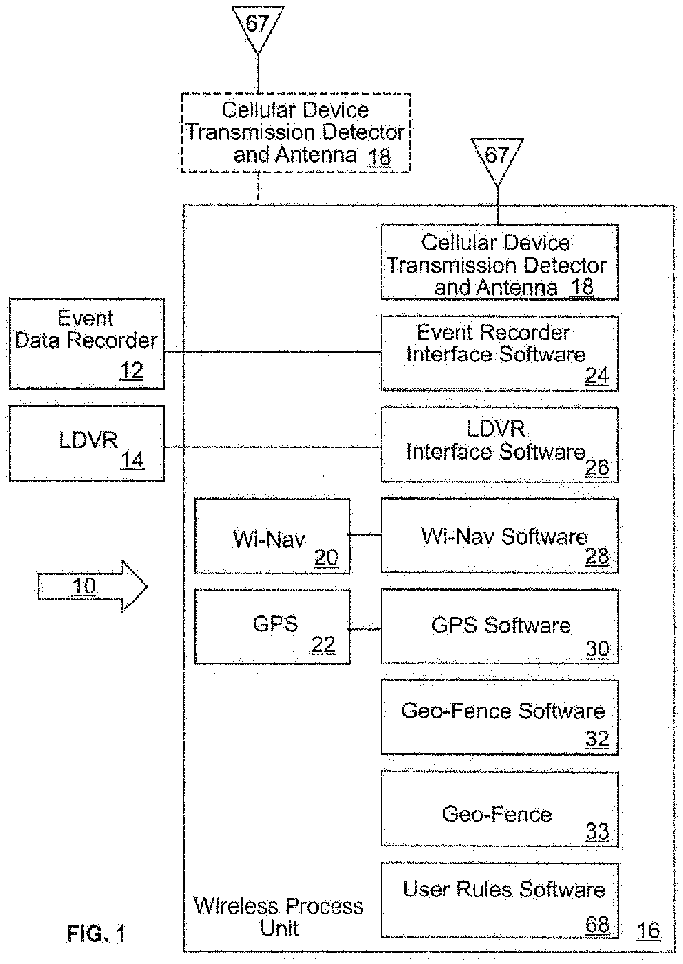

The mobile asset cellular device transmission detection system and method of the present invention and its components are shown in Fig. 1. The mobile asset cellular device transmission system 10 consists of five interrelated components: an event data recorder (ER) 12, a locomotive digital video recorder (LDVR) 14, a wireless processing unit (Wi-PU) 16, and a cellular device transmission detector and antenna 18. The cellular device transmission detector 18 can be within the Wi-PU 16 or outside of the Wi-PU 16. A Wi-Nav 20 component and a global positioning system (GPS) component 22 are within the Wi-PU 16. The Wi-PU 16 also includes ER 12 interface software 24, LDVR 14 interface software 26, Wi-Nav 20 software 28, GPS 22 software 30, geo-fence software 32 and user rules software 68. Installing the Wi-PU 16 onto an asset, such as a locomotive, consists of mounting the Wi-PU 16 with an external or internal cellular device transmission detector 18, and connecting it externally to an ER 12, an LDVR 14, a directional or omni-directional receiving antenna 67 and any additional available condition sensing devices.

The ER 12, similar to a black-box on airplanes, is an onboard data logging device for locomotives. A typical ER 12 consists of digital and analog inputs as well as pressure switches and pressure transducers which record data from various onboard devices, such as throttle position, brake pressures, emergency brake application, and horn and bell application. The Wi-PU 16 receives and processes data from the ER 12 once per second over an external serial connection.

The LDVR 14, similar to a television DVR, is an onboard audio, still image and/or video recording device. The LDVR 14 comes equipped with a forward facing camera and may also include an in-cab facing camera, a rear facing camera, and microphones. The cameras are mounted at such orientations that they see and record what the engineer sees and the cab environment. The Wi-PU 16 accesses the LDVR 14 via an external Ethernet connection to download the audio, still image and/or video from the hard drive before, during, and after an event, such as when the cellular device transmission detector 18 detects that a cellular device is powered on and transmitting.

The Wi-PU 16 can use the geo-fence software 32 to set a geo-fence 33 that defines a geographic location, region or boundary within which the cellular device transmission detector 18 is to check for transmission or disregard a transmission detection. The geo-fence can be configurable to certain geographic locations 33. The geo-fence 33 can geographically define locations where cellular device detection is disabled, enabled or otherwise controlled.

The Wi-PU 16 can use the user rules software 68 to define specific rules under which the cellular device transmission detector 18 is to check for transmission or disregard a transmission detection. The user rules 68 define regulatory, statutory, government, business, operational or safety requirements where cellular device detection is disabled, enabled or otherwise controlled.

The Wi-PU 16 of the illustrated embodiment is a ruggedized onboard computer running Windows XP or a similar operating system embedded specifically for industrial applications. It has many different features that can be installed to customize the product for specific customer needs. The Wi-PU 16 has the ability to communicate with a wide variety of onboard systems, including, but not limited to, vehicle control systems, event data recorders, LDVRs, cellular device transmission detectors, and engine controllers. The Wi-PU 16 has the ability to communicate over a wide variety of protocols, including, but not limited to, RS 232, RS 422, RS 485, CAN Bus, Ethernet, WiFi, cellular, and satellite.

The cellular device transmission detector 18, as is known in the art, can be an internal or external component of the Wi-PU 16. The cellular device transmission detector 18 detects several frequencies. In North America, the cellular device transmission detector 18 detects 1850-1910 MHz (PCS), 824-849 MHz (CDMA), 896-901 MHz (GSM), and 700 MHz (LTE). The cellular device transmission detector 18 has an adaptive sensitivity and can be optimized for the particular model of locomotive it is to be used on. The cellular device transmission detector 18 can be used with either a directional or omnidirectional receiving antenna 67.

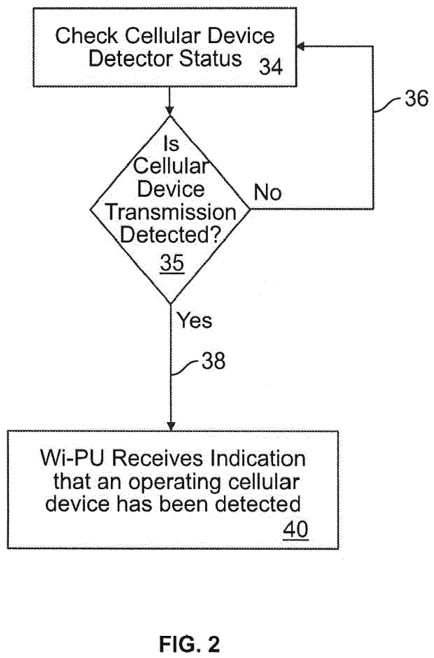

Fig. 2 is a flow diagram showing when a cellular device transmission is detected in the present invention. The cellular device transmission detector 18 (Fig. 1) continually checks the cellular device transmission status 34 as received using the in cab antenna 67 (Fig. 1), checking if the cellular device is powered on and/or transmitting a signal 35. If the cellular device is not powered on and/or is not transmitting a signal 36, then the cellular device transmission detector continues to check the status 34. If the cellular device is powered on and/or is transmitting a signal 38, the cellular device transmission detector 18 alerts the Wi-PU 16 of the signal detection 40. The cellular device transmission detector 18 will detect cellular transmissions within the cab of a mobile asset. Transmissions include placing a phone call, answering a phone call, sending a text message, receiving a text message, any data transmission (email updates, browsing the internet, etc.), and the operation of a portable cellular based Wi-Fi hotspot.

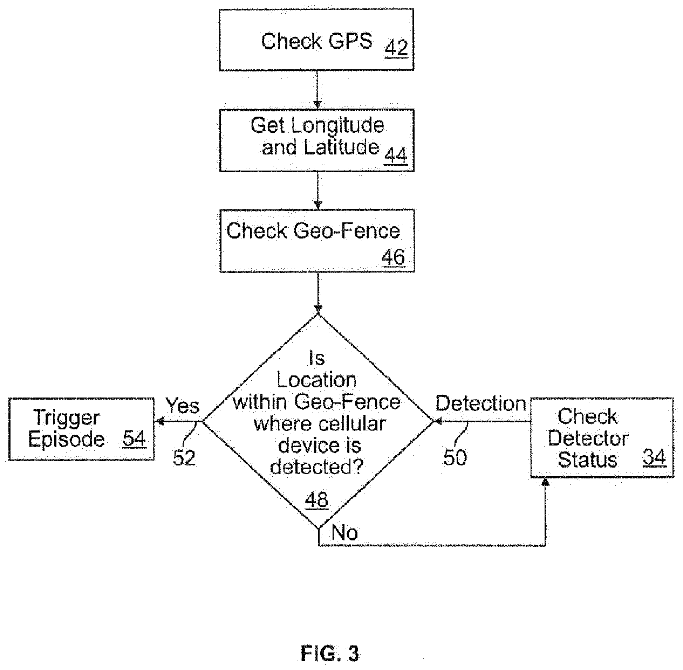

Fig. 3 is a flow diagram showing when a cellular device transmission has been detected. Once the Wi-PU 16 (Fig. 1) is alerted that a signal has been detected, the GPS software 30 (Fig. 1) checks the GPS 42 and obtains the mobile asset's location in latitude and longitude 44. The Wi-PU 16 then checks the geo-fence 46 and determines whether the location of the mobile asset is within that geo-fence 46 and whether the cellular device detection is disabled, enabled or otherwise controlled. If the location of the mobile asset is within the geo-fence 46 and cellular device detection is not enabled 50 within that geo-fence 46, the cellular device transmission detector 18 continues to check detector status 34 (Fig. 2). If the location of the mobile asset is within the geo-fence 46 and cellular device detection is enabled 52 or otherwise controlled, the Wi-PU 16 triggers an episode 54.

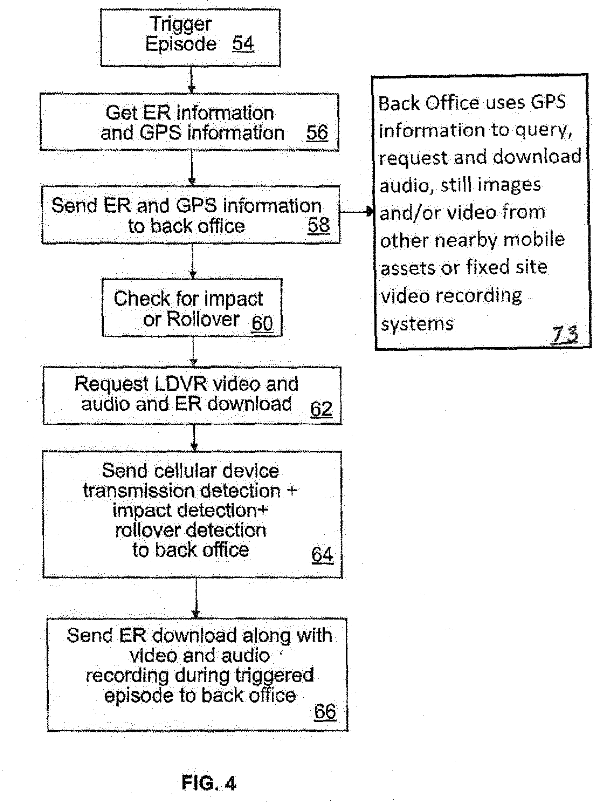

Fig. 4 is a flow diagram showing when a trigger episode 54 has been detected. When a trigger episode 54 has been detected, the ER information software 24 (Fig. 1) checks the ER information and the GPS software 30 (Fig. 1) checks the GPS and obtains the mobile asset's location in latitude and longitude, heading and speed 56. The Wi-PU 16 then sends the ER information and the GPS 22 location to the back office 58. The ER information can include throttle position, brake pressure, emergency brake application, horn and bell application. The back office uses GPS information to query, request and download audio, still images and/or video from other nearby mobile assets or fixed site video recording systems 73. The Wi-PU 16 then checks the Wi-Nav software 28 and determines whether an impact and/or a rollover occurred 60. The Wi-PU will then send the back office information on whether cellular device transmission was detected, cellular device transmission was detected with an impact, and/or cellular device transmission was detected with a rollover 62. The Wi-PU 16 will also check the LDVR software 26 (Fig. 1) to obtain audio, still image and/or video recordings 64 of the trigger episode 54 and will send the audio/still image/video recording from the LDVR 14 for the time of the trigger episode 54 to the back office 66.

The back office uses the GPS 22 location information to determine other nearby or adjacent mobile assets equipped with an LDVR 14. The back office requests and receives still image and/or video data from an adjacent mobile asset's Wi-PU 16 with LDVR software 26.

The back office uses the GPS 22 location information to determine other nearby or adjacent fixed sites equipped with an LDVR 14. The back office requests and receives still image and/or video data from the fixed site LDVRs 14.

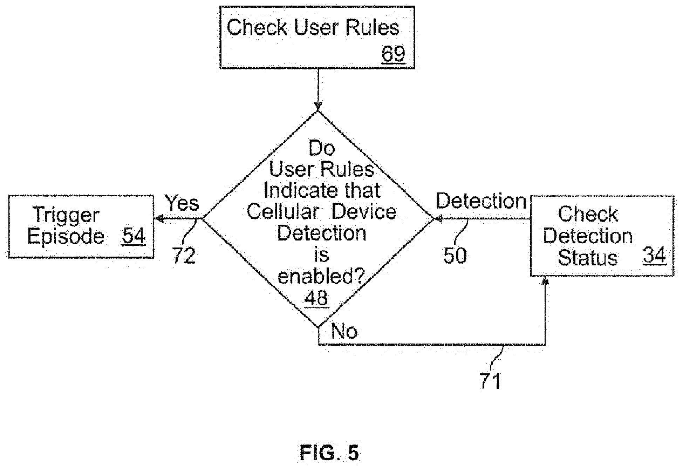

Fig. 5 is a flow diagram showing when cellular device transmission has been detected. Once the Wi-PU 16 (Fig. 1) is alerted that a signal has been detected, the Wi-PU checks the user defined rules 69 to determine whether the cellular device detection is disabled, enabled or otherwise controlled 70. If the user defined rules indicate that cellular device detection is not enabled 71, the cellular device transmission detector 18 continues to check detector status 34 (Fig. 2). If the user defined rules indicate that cellular device detection is enabled 72 or otherwise controlled, the Wi-PU 16 triggers an episode 54.

The foregoing description of an illustrated embodiment of the invention has been presented for purposes of illustration and description, and is not intended to be exhaustive or to limit the invention to the precise form disclosed. The description was selected to best explain the principles of the invention and practical application of these principles to enable others skilled in the art to best utilize the invention in various embodiments and various modifications as are suited to the particular use contemplated. It is intended that the scope of the invention not be limited by the specification, but be defined by the claims set forth below.

## Claims

1. A method for detecting operation of a cellular device onboard a mobile asset, wherein the method comprises the steps of:
detecting a cellular signal, using one of a directional and omnidirectional receiving antenna (67), produced by the cellular device onboard the mobile asset;
continually checking a transmission status (34) of the cellular device based on the cellular signal, detected by the antenna, using a cellular device transmission detector (18) onboard a mobile asset;
receiving an indication of the cellular signal of the cellular device, using a wireless processing unit (16) onboard the mobile asset, from the cellular device transmission detector when the transmission status indicates that the cellular device is at least one of powered on and transmitting a signal;
checking, with a global positioning system software application (30), a global positioning system, GPS, (22) within the wireless processing unit onboard the mobile asset; and
determining a location of the mobile asset based on GPS data received from the GPS on a condition that GPS data is available from the GPS and based on dead reckoning on a condition that GPS data is not available from the GPS; **characterized in that** the method further comprises:
the wireless processing unit comparing the location to a predetermined geo-fence area (46);
the wireless processing unit triggering an episode (54) at a time when the location is within the predetermined geo-fence area and cellular device transmission detection is one of enabled and controlled within the predetermined geo-fence area;
the method further comprising, when an episode has been triggered, the steps of:
checking at least one event data recorder (12) onboard the mobile asset, using an event data recorder software application (24) and obtaining event data recorder information recorded for the time of the episode;
the global positioning system software application obtaining GPS information of the mobile asset;
the wireless processing unit sending the event data recorder information and the GPS information to a back office (58);
the wireless processing unit detecting at least one of the indication of the cellular signal, the indication of the cellular signal and an impact indication involving the mobile asset, and the indication of the cellular signal and a rollover indication involving the mobile asset;
sending the detected. at least one of the indication of the cellular signal, the indication of the cellular signal and the impact indication, and the indication of the cellular signal and the rollover indication to the back office;
the wireless processing unit requesting at least one of a first audio recording, a first still image recording, and a first video recording recorded before, during and after the time of the episode from a digital video recorder (14) onboard the mobile asset; and
the wireless processing unit sending at least one of the first audio recording, first still image recording, and first video recording to the back office,
wherein the back office uses the GPS information to locate at least one of an adjacent mobile asset and an adjacent fixed site, and
wherein the back office requests and receives at least one of a second audio recording, a second still image recording, and a second video recording from at least one of the adjacent mobile asset and the adjacent fixed site.

2. The method of claim 1, wherein transmitting a signal includes at least one of placing a phone call, answering a phone call, sending a text message, receiving a text message, transmitting data, and operating a portable cellular based wi-fi hotspot.

3. The method of claim 1, wherein the transmission status (34) includes at least one of the cellular device is powered on, the cellular device is powered off, the cellular device is transmitting a signal, and the cellular device is receiving a signal.

4. The method of claim 1, wherein the GPS information includes at least one of the location, a heading, and a speed (56) of the mobile asset.

5. The method of claim 1, wherein the event data recorder information includes at least one of throttle position, brake pressure, emergency brake application, and horn and bell application of the mobile asset.

## Patentansprüche

1. Verfahren zum Detektieren eines Betriebs einer zellularen Einrichtung an Bord eines mobilen Sachguts,
wobei das Verfahren die Schritte umfasst:
Detektieren eines zellularen Signals, unter Verwendung einer direktionalen oder einer omnidirektionalen Empfangsantenne (67), erzeugt durch die zellulare Einrichtung an Bord des mobilen Sachguts;
kontinuierliches Prüfen eines Übertragungsstatus (34) der zellularen Einrichtung auf Basis des zellularen Signals, durch die Antenne detektiert, unter Verwendung eines Zellulare-Einrichtungs-Übertragungsdetektors (18) an Bord eines mobilen Sachguts;
Empfangen einer Anzeige des zellularen Signals der zellularen Einrichtung, unter Verwendung einer Funkverarbeitungseinheit (16) an Bord des mobilen Sachguts, von dem Zellulare-Einrichtungs-Übertragungsdetektor, wenn der Übertragungsstatus anzeigt, dass die zellulare Einrichtung eingeschaltet ist und/oder ein Signal überträgt;
Prüfen, mit einer Globale-Positionierungs-System-Softwareanwendung (30) eines globalen Positionierungssystems, GPS, (22) innerhalb der Funkverarbeitungseinheit an Bord des mobilen Sachguts; und
Bestimmen eines Orts des mobilen Sachguts auf Basis von von dem GPS empfangenen GPS-Daten unter der Bedingung, dass GPS-Daten von dem GPS verfügbar sind, und auf Basis einer Koppelnavigation unter der Bedingung, dass GPS-Daten nicht von dem GPS verfügbar sind;
**dadurch gekennzeichnet, dass** das Verfahren weiter umfasst:
die Funkverarbeitungseinheit vergleicht den Ort mit einem vorbestimmten Geofence-Bereich (46);
wobei die Funkverarbeitungseinheit eine Episode (54) zu einer Zeit auslöst, wenn sich der Ort innerhalb des vorbestimmten Geofence-Bereichs befindet und die Zellulare-Einrichtungs-Übertragungsdetektion innerhalb des vorbestimmten Geofence-Bereichs aktiviert oder gesteuert ist; wobei das Verfahren weiterhin die Schritte umfasst,
wenn eine Episode ausgelöst worden ist:
Prüfen mindestens eines Ereignisdatenrecorders (12) an Bord des mobilen Sachguts, unter Verwendung einer Ereignisdaten-Recorder-Softwareanwendung (24) und Erhalten von für die Zeit der Periode aufgezeichneten Ereignisdaten-Recorder-Informationen;
die Globale-Positionierungs-System-Anwendung GPS-Informationen des mobilen Sachguts erhält;
die Funkverarbeitungseinheit die Ereignisdaten-Recorder-Informationen und die GPS-Informationen zurück zu einem Back-Office (58) überträgt;
die Funkverarbeitungseinheit mindestens Eines der Anzeige des zellularen Signals, der Anzeige des zellularen Signals und einer Aufprallanzeige involvierend das mobile Sachgut und der Anzeige des zellularen Signals und einer Überschlaganzeige involvierend das mobile Sachgut detektiert;
Senden des detektierten mindestens Einen der Anzeige des zellularen Signals, der Anzeige des zellularen Signals und der Aufprallanzeige und der Anzeige des zellularen Signals und der Überschlaganzeige an das Back-Office;
die Funkverarbeitungseinheit mindestens Eines einer ersten Audioaufzeichnung, einer ersten Standbildaufzeichnung und einer ersten Videoaufzeichnung, aufgezeichnet vor, während und nach der Zeit der Episode von einem digitalen Videorecorder (14) an Bord des mobilen Sachguts, anfordert; und
die Funkverarbeitungseinheit mindestens Eines der ersten Audioaufzeichnung, der ersten Standbildaufzeichnung und einer ersten Videoaufzeichnung zurück zu dem Back-Office sendet,
wobei das Back-Office die GPS-Informationen verwendet, um ein benachbartes mobiles Sachgut und/oder eine benachbarte feste Stelle zu lokalisieren, und
wobei das Back-Office mindestens Eine einer zweiten Audioaufzeichnung, einer zweiten Standbildaufzeichnung und einer zweiten Videoaufzeichnung von dem benachbarten mobilen Sachgut und/oder der benachbarten festen Stelle anfordert und empfängt.

2. Verfahren nach Anspruch 1, wobei das Übertragen eines Signals mindestens Eines von Einleiten eines Telefonanrufs, Beantworten eines Telefonanrufs, Senden einer Textnachricht, Empfangen einer Textnachricht, Übertragen von Daten und Betreiben eines tragbaren zellularbasierten WiFi-Hotspots beinhaltet.

3. Verfahren nach Anspruch 1, wobei der Übertragungsstatus (34) mindestens Eines beinhaltet von: die zellulare Einrichtung ist eingeschaltet, die zellulare Einrichtung ist ausgeschaltet, die zellulare Einrichtung überträgt ein Signal und die zellulare Einrichtung empfängt ein Signal.

4. Verfahren nach Anspruch 1, wobei die GPS-Informationen mindestens Eines des Orts, eines Kurses und einer Geschwindigkeit (56) des mobilen Sachguts enthält.

5. Verfahren nach Anspruch 1, wobei die Ereignisdatenrecorderinformationen mindestens Eines von Drosselposition, Bremsdruck, Notbremsung und Hupe- und Klingelbetätigung des mobilen Sachguts enthält.

## Revendications

1. Procédé pour détecter le fonctionnement d'un dispositif cellulaire à bord d'un équipement mobile, où le procédé comprend les étapes suivantes :
détecter un signal cellulaire, en utilisant une antenne parmi une antenne de réception directionnelle et une antenne de réception omnidirectionnelle (67), produit par le dispositif cellulaire à bord de l'équipement mobile ;
vérifier continuellement un état de transmission (34) du dispositif cellulaire sur la base du signal cellulaire, détecté par l'antenne, en utilisant un détecteur de transmission de dispositif cellulaire (18) à bord d'un équipement mobile ;
recevoir une indication du signal cellulaire du dispositif cellulaire, en utilisant une unité de traitement sans fil (16) à bord de l'équipement mobile, depuis le détecteur de transmission du dispositif cellulaire lorsque l'état de transmission indique que le dispositif cellulaire est au moins dans l'un des états suivants : sous tension et en cours de transmission d'un signal ;
vérifier, à l'aide d'une application logicielle de système mondial de positionnement (30), un système mondial de positionnement, GPS (22), dans l'unité de traitement sans fil à bord de l'équipement mobile ; et déterminer l'emplacement de l'équipement mobile sur la base des données GPS reçues du GPS dans le cas où les données GPS sont disponibles auprès du GPS et sur la base d'une estimation à l'aveugle dans le cas où les données GPS ne sont pas disponibles auprès du GPS ;
**caractérisé en ce que** le procédé comprend en outre les étapes suivantes :
l'unité de traitement sans fil compare l'emplacement à une zone de gardiennage virtuel prédéterminée (46) ;
l'unité de traitement sans fil déclenche un épisode (54) à un moment où l'emplacement se trouve dans la zone de gardiennage virtuel prédéterminée et où la détection de la transmission du dispositif cellulaire est soit activée, soit contrôlée dans la zone de gardiennage virtuel prédéterminée ;
le procédé comprenant en outre, lorsqu'un épisode a été déclenché, les étapes suivantes :
vérifier au moins un enregistreur de données d'événement (12) à bord de l'équipement mobile, utiliser une application logicielle d'enregistreur de données d'événement (24) et obtenir des informations d'enregistreur de données d'événement enregistrées pendant la durée de l'épisode ;
l'application logicielle de système mondial de positionnement obtient des informations GPS de l'équipement mobile ;
l'unité de traitement sans fil envoie les informations de l'enregistreur de données d'événement et les informations GPS à un arrière-guichet (58) ;
l'unité de traitement sans fil détectant au moins l'une des indications suivantes : l'indication du signal cellulaire, l'indication du signal cellulaire et une indication d'impact concernant l'équipement mobile, et l'indication du signal cellulaire et une indication de retournement concernant l'équipement mobile ;
envoyer à l'arrière-guichet au moins une indication détectée parmi les suivantes : l'indication du signal cellulaire, l'indication du signal cellulaire et l'indication d'impact, et l'indication du signal cellulaire et l'indication de retournement ;
l'unité de traitement sans fil demande au moins l'un des enregistrements suivants : un premier enregistrement audio, un premier enregistrement d'image fixe et un premier enregistrement vidéo enregistré avant, pendant et après le moment de l'épisode auprès d'un enregistreur vidéo numérique (14) à bord de l'équipement mobile ; et
l'unité de traitement sans fil envoie à l'arrière-guichet au moins l'un des enregistrements suivants : le premier enregistrement audio, le premier enregistrement d'image fixe et le premier enregistrement vidéo,
où l'arrière-guichet utilise les informations GPS pour localiser au moins un élément parmi un équipement mobile adjacent et un site fixe adjacent, et
où l'arrière-guichet demande et reçoit au moins un enregistrement parmi les suivants : un deuxième enregistrement audio, un deuxième enregistrement d'image fixe et un deuxième enregistrement vidéo depuis au moins l'un parmi l'équipement mobile adjacent et le site fixe adjacent.

2. Procédé selon la revendication 1, dans lequel la transmission d'un signal comprend au moins l'une des actions suivantes : passer un appel téléphonique, répondre à un appel téléphonique, envoyer un message texte, recevoir un message texte, transmettre des données et exploiter un point d'accès Wi-Fi basé sur un téléphone mobile.

3. Procédé selon la revendication 1, dans lequel l'état de transmission (34) comprend au moins l'un des états suivants : le dispositif cellulaire est sous tension, le dispositif cellulaire est hors tension, le dispositif cellulaire transmet un signal et le dispositif cellulaire reçoit un signal.

4. Procédé selon la revendication 1, dans lequel les informations GPS comprennent au moins l'un des éléments suivants : la localisation, un cap et une vitesse (56) de l'équipement mobile.

5. Procédé selon la revendication 1, dans lequel les informations d'enregistreur de données d'événement comprennent au moins une des informations suivantes : la position du papillon des gaz, la pression de freinage, l'application d'un frein d'urgence et l'application de l'avertisseur et de la sonnette de l'équipement mobile.
